# EUROPÄISCHE PATENTSCHRIFT

(11) **EP 0 314 156 B1**
(45) Veröffentlichungstag und Bekanntmachung des Hinweises auf die Patenterteilung: **09.03.1994**
(21) Anmeldenummer: 88117982.4
(22) Anmeldetag: 28.10.1988
(51) Int. Cl.: C08F 220/14, C08F 220/06, C08L 33/02, C08J 11/08

(54) **COOH-Gruppen enthaltendes Polymerisat, Mischung von COOH-Gruppen enthaltenden Polymerisaten mit Füllstoffen und Verwendung zur Herstellung von Formkörpern**
Polymers containing COOH groups, blend of polymers containing COOH groups with fillers and their use in the preparation of moulded articles
Polymère contenant des groupes COOH, mélange de polymères contenant des groupes COOH avec des matières de remplissage et leur usage dans la préparation d'objets moulés

(30) Priorität: 28.10.1987 DE 3736575; 14.10.1988 DE 3835013
(43) Veröffentlichungstag der Anmeldung: 03.05.1989
(73) Patentinhaber: BELLAND AG, 4500 Solothurn (CH)
(72) Erfinder: Deibig, Heinrich, Dr.Chem., CH-4524 Guensberg (CH); Dinkelaker, Albrecht, CH- 4562 Biberist (CH)
(74) Vertreter: Patentanwälte Ruff, Beier, Schöndorf und Mütschele

(56) Entgegenhaltungen:
- EP-A- 0 143 935
- FR-A- 2 194 730
- FR-A- 2 381 074
- US-A- 3 705 137

## Beschreibung

Die Erfindung betrifft ein COOH-Gruppen enthaltendes thermoplastisches Copolymerisat, eine thermoplastisch verformbare Mischung aus einem COOH-Gruppen aufweisenden, in wäßrigem, insbesondere wäßrig-alkalischem Medium lösbaren Polymeren und Füllstoffen sowie die Verwendung des Copolymerisates und der Mischung zur Herstellung von Formkörpern. COOH-Gruppen aufweisende Polymere, insbesondere Copolymerisate, die unter Verwendung von COOH-Gruppen aufweisenden ungesättigten organischen Carbonsäuren und copolymerisierbaren ungesättigten Verbindungen hergestellt sind, sind bereits mehrfach beschrieben. Es sei beispielsweise auf die europäische Patentschrift 32 244 sowie auf die europäischen Offenlegungsschriften 69 296, 143 894 und 143 935 hingewiesen, auf deren Inhalt hier Bezug genommen wird. In diesen Druckschriften ist bereits beschrieben, daß aus den COOH-Gruppen enthaltenden Polymerisaten Formkörper, insbesondere Folien hergestellt werden können, die in wäßrig-alkalischem Medium lösbar sind. Dabei lassen sich dünne Formkörper, wie Folien, schnell auflösen, wogegen bei dickeren Formteilen, wie zum Beispiel Spritzgußkörpern, größere Mengen an alkalisch-wirkendem Medium erforderlich sind und auch die Zeitdauer bis zur vollständigen Auflösung recht groß ist.

Aus der FR-A-2 194 730 sind Copolymerisate und Terpolymerisate bekannt, die unter Verwendung von Methacrylsäure hergestellt sind, wobei das Comonomer bei allen Beispielen Methylmethacrylat ist. Außerdem enthalten die beschriebenen Polymere nicht unbeträchtliche Mengen an Wasser. Dabei geht es darum, Kunststoffplatten herzustellen, die flammwidrige Eigenschaften aufweisen. Die Platten werden dadurch hergestellt, daß das Monomergemisch in einer entsprechenden Form polymerisiert wird, so daß die Platte direkt hergestellt wird. Ein späteres Umformen ist nur noch in begrenztem Maße möglich, da das Wasser sonst entweicht und außerdem Kondensationsreaktionen zwischen funktionellen Gruppen des Polymeren bewirkt. Als Termonomeres wird bei der Herstellung der Platten bevorzugt Acrylamid verwendet. Dies führt bei Umformungstemperaturen bzw. bei thermoplastischen Verarbeitungen zu Vernetzungsreaktionen.

Die FR-A-2 381 074, betrifft ein Verfahren zur Herstellung eines Copolymer-Latex, der als Emulgiermittel den Dioctylester von Sulfobernsteinsäure enthält. Sämtliche Beispiele zeigen, daß als α, β -ungesättigte Carbonsäure Methacrylsäure verwendet wird. Die Verwendung von Acrylsäure ist zusammen mit Methacrylsäure oder Äthacrylsäure beschrieben. Es handelt sich dann um ein Terpolymer. Die Polymere werden nicht isoliert, sondern bleiben in der Form einer Emulsion, die als Verdickungsmittel für Acrylsysteme verwendet wird.

Es wurde nun gefunden, daß COOH-Gruppen aufweisende, in wäßrigem Medium lösbare bzw. desintegrierbare Polymere, insbesondere in Mischung mit Füllstoffen, zur Herstellung von ausreichend stabilen Formkörpern geeignet sind, wobei die Formkörper den Vorteil haben, daß sie sich ausreichend schnell und unter Einsparung von Alkali auflösen lassen.

Gegenstand der Erfindung ist ein thermoplastisches Copolymerisat aus weniger als 2,5 mol Methyl-Acrylat pro mol Acrylsäure. Vorzugsweise ist das Copolymerisat ein solches aus 0,2 bis 2 mol, insbesondere 0,4 bis 0,8 mol Methyl-Acrylat pro mol Acrylsäure. Das mol-Verhältnis von 0,5 zu 1 ist besonders bevorzugt. Es wurde gefunden, daß Copolymerisate mit einem derart hohen Anteil an Carbonsäure bzw. Carboxylgruppen noch thermoplastisch verarbeitbar sind. Aufgrund ihres hohen Anteils an Carboxylgruppen sind die Copolymerisate bei Zugabe nur geringer Anteile an basischen Stoffen in wäßrigen Medien löslich. Besonders dann, wenn der molare Anteil an Acrylsäure höher ist als der molare Anteil an Methyl-Acrylat, ist das Copolymerisat, wie gefunden wurde, auch schon in neutralen wäßrigen Medien desintegrierbar, insbesondere zumindest teilweise in neutralen wäßrigen Medien löslich. Dabei ist unter desintegrierbar ein Zerfallen zu verstehen, wobei höchstens ein kleiner Teil des Copolymerisats in Lösung geht. Der Rest liegt in Teilchenform insbesondere als Suspension vor. Dadurch ist es möglich, die Copolymerisate und daraus hergestellte Körper in wäßrigen Medien ohne Zugabe von Alkalien oder nur unter Zugabe geringer Mengen von Alkalien zu desintegrieren bzw. aufzulösen und andererseits das Copolymerisat durch leichtes Ansäuern des wäßrigen Mediums wieder auszufällen, wodurch infolge der geringen Mengen an Säure bzw. Alkali eine unerwünscht hohe Salzbildung bei Neutralisationsvorgängen vermieden werden kann. Der Carboxylgehalt des Copolymerisats liegt vorzugsweise bei 30 bis 50 Gew.-%, insbesondere 35 bis 45 Gew.-%, wobei ca. 40 Gew.-%, bezogen auf das füllstofffreie Polymere, besonders bevorzugt sind. Das Copolymerisat ist frei von Terpolymeren. Das Copolymerisat kann als thermoplastisch verarbeitbares Pulver oder Granulat sowie als Spritzgußteil, Preßling, Preßformteil, Blasformteil, Tiefziehteil, Gießteil oder in Form einer Folie, Platte oder eines anderen Formkörpers vorliegen, jeweils gegebenenfalls in Verbindung mit wasserlöslichen und/oder wasserunlöslichen Füllstoffen.

Gegenstand der Erfindung ist weiterhin eine thermoplastisch verformbare Mischung aus 10 bis 90 Gew.-% von mindestens einem erfindungsgemäßen in wäßrig-alkalischem Medium lösbarem Polymeren und 90 bis 10 Gew.-% insbesondere 60 bis 20 Gew.-% von mindestens einem Füllstoff. Mindestens 10 Gew.-% des Füllstoffes, bezogen auf das Gesamtgewicht der Mischung, können in neutralem bis alkalisch-wäßrigem Medium löslich sein. Der lösliche Füllstoff ist vorzugsweise neutral. Der Füllstoff kann mit Vorteil auch unlöslich in wäßrigen Medien, insbesondere neutralen und sauren wäßrigen Medien sein. Als solcher Füllstoff eignet sich besonders Talkum, weiterhin Bariumsulfat, Calciumphosphat, Glimmer, Kaolin, Glaskugeln, Glas-, Kohle -und andere Fasern. Auch Mischungen sind möglich.

Es hat sich herausgestellt, daß der Anteil an Füllstoff recht hoch gehalten werden kann, ohne daß die thermoplastische Verarbeitbarkeit der Mischung und die Festigkeit der Formkörper darunter leidet. So kann mit Füllstoffmengen im Bereich von 30 bis 80, insbesondere 30 bis 70 Gew.-% gearbeitet werden. Für vielerlei Anwendungszwecke geeignet sind Mischungen mit einem Füllstoffanteil von 40 bis 60 Gew.-%, insbesondere ca. 50 Gew.-%. Die Teilchengröße der Füllstoffe liegt vorzugsweise im Bereich von 0,1 bis 2 mm, insbesondere 0,2 bis 1 mm. Sie kann auch wesentlich darunter liegen. So liegt sie bei unlöslichen Füllstoffen vorzugsweise im Bereich von 0,1 bei 200 µm, insbesondere 0,2 bis 50 µm.

Werden unlösliche Füllstoffe verwendet, dann liegt der Füllstoffgehalt vorzugsweise niedriger, insbesondere bei 10 bis 70 Gew.-%. In Verbindung mit unlöslichen Füllstoffen werden vorzugsweise Copolymerisate verwendet, bei denen der molare Anteil von Methyl-Acrylat zu Acrylsäure bei höchstens 1:1, vorzugsweise darunter liegt, insbesondere bei ca. 0,5:1. Die bessere Wasserlöslichkeit der Copolymerisate begünstigt dann die Auflösbarkeit ohne Alkalibedarf oder mit nur geringen Alkalimengen. Höhere Füllstoffmengen begünstigen auch hier die Desintergrierbarkeit.

Die Mischung liegt vorzugsweise in Form eines Granulats oder eines Pulvers vor, bei dem Polymere und der Füllstoff bereits fest miteinander verbunden sind, vorzugsweise in inniger Vermischung. Ein solcher Zustand der Mischung erleichtert die Verarbeitbarkeit und führt zu Formkörpern mit gleichförmigen Eigenschaften. Die innige Vermischung zwischen Füllstoff und Copolymer kann mit Hilfe eines Extruders erfolgen. Vorzugsweise wird auch das Polymere selbst durch Polymerisation im Extruder hergestellt, wie dies in der europäischen Offenlegungsschrift 143 894 beschrieben ist. Nach ihrer Verarbeitung liegt die Mischung vorzugsweise als Formkörper vor. Die Formkörper werden vorzugsweise durch Urformen und/oder Umformen, wie Pressen, Spritzgießen, Kompressionsspritzgießen, Rotationsgießen, Hohlkörperblasen, Tiefziehen und/oder Hohlraumspritzen (Gasinnendruckverfahren) hergestellt, wie dies bei der Verarbeitung von thermoplastischen Stoffen üblich ist. Auch andere Verarbeitungsverfahren sind möglich. Es wurde gefunden, daß solche Formkörper eine sehr gute Stabilität besitzen. So können sie einen E-Modul von über 2000 und sogar über 20.000 N/mm² aufweisen. Auch Bruchdehnungen von weniger als 20 %, insbesondere weniger als 10 % sind erzielbar. Je nach Art des verwendeten Polymerisates, insbesondere bei hohem Anteil an Füllstoff, sind aufgrund der schlechten Wärmeleitfähigkeit beim Umspritzen äußere Temperaturbelastungen von über 300 °C, in Einzelfällen bis 420 °C möglich.

Die die COOH-Gruppen aufweisenden Polymere, die erfindungsgemäßen Mischungen und die daraus hergestellten Formkörper, haben den wesentlichen Vorteil, daß der Polymeranteil nach der Auflösung in neutralem wäßrigem oder alkalisch-wäßrigem Medium durch anschließendes Fällen mit Säure rückgewinnbar ist, dadurch können unlösliche Füller vom gelösten Polymer leicht abgetrennt werden. Es ist sogar möglich, wasserlösliche Füllstoffe wieder rückzugewinnen, worauf später noch eingegangen wird.

Der Füllstoff kann vollständig aus wasserlöslichen, insbesondere neutralen Anteilen bestehen, was in vielen Fällen bevorzugt ist. Es ist jedoch auch möglich, unlösliche, insbesondere mineralische Füllstoffe alleine zu verwenden oder mit wasserlöslichen Füllstoffen zu vermischen. Bei einer Ausführungsform sind mindestens 50 Gew.-% des Füllstoffes wasserlöslich. Als wasserlösliche Füllstoffe eignen sich aufgrund ihrer Temperaturbeständigkeit besonders anorganische wasserlösliche Salze, insbesondere Alkalinitrate und/oder Alkalisulfate. Es können jedoch auch, besonders dann, wenn es auf die Temperaturbeständigkeit nicht ankommt, wasserlösliche organische Füllstoffe verwendet werden. Wie bereits erwähnt, sind neutral reagierende Füllstoffe besonders bevorzugt. Die Lösungen der wasserlöslichen Füllstoffe, die nach der Ausfällung des Polymers mit Säure anfallen, können entweder direkt weiterverwendet werden. So haben die nitrathaltigen Lösungen Düngemitteleigenschaften. Bei sulfathaltigen Lösungen ist eine Rückgewinnung des Sulfates nach Ansäuern mit Schwefelsäure durch Ausfällen mit Kalkmilch unter Gewinnung von Gips möglich, wobei gleichzeitig wiedereinsetzbares Alkali anfällt. Die Aufarbeitung der beim Auflösen der Formkörper erhaltenen Lösungen ist somit umweltfreundlich möglich. Die COOH-Gruppen enthaltenden Polymere können auch mit Ammoniak, insbesondere NH₃-Gas, vorzugsweise unter Druck bei 0 bis 100 °C, behandelt werden, um das Material wasserlöslich zu machen. Zur Auflösung reicht dann ein neutrales wäßriges Medium aus. In diesem Falle kann als Salz auch Ammoniumcarbonat verwendet werden. Bevorzugt werden die Copolymere nicht vollständig aufgelöst, sondern nur desintegriert. Aus den Copolymerisaten oder den Mischungen mit Füllstoffen hergestellte Formkörper zerfallen dabei in wäßrige Suspensionen, die ungelöstes Copolymerisat in feinteiliger Form in Suspension enthalten. Je nachdem, ob die Füllstoffe löslich sind oder nicht, befinden sie sich dann in der Lösungsphase oder zusammen mit dem Copolymerisat in der dispergierten Phase. Dadurch, daß der größte Teil des Copolymerisats durch das wäßrige Medium nicht gelöst, sondern nur in Teilchen zerteilt wird, kann ohne oder nur mit geringen Alkalimengen gearbeitet werden. Ein besonders günstiges Mischverhältnis der Monomere liegt bei 0,5 bis 2 mol, insbesondere 0,5 bis 1 mol Methyl-Acrylat pro mol Acrylsäure. Bei einem mol-Verhältnis von 1:1 sind sehr gute thermoplastische Eigenschaften mit guter Löslichkeit kombiniert. Wird der Säureanteil erhöht, dann wird auch die Lösbarkeit erhöht, umgekehrt werden durch Erhöhen des Anteiles an Acrylat die thermoplastischen Eigenschaften verbessert.

Es wurde bisher angenommen, daß Copolymerisate aus Methyl-Acrylat und Acrylsäure mit einem hohen Säurenanteil nicht mehr in thermoplastischer Form hergestellt werden können. Es wurde nunmehr gefunden, daß insbesondere bei der Polymerisation im Extruder so wie sie in der europäischen Offenlegungsschrift 143 894 und der europäischen Offenlegungsschrift 143 935 beschrieben ist, auch Copolymerisate mit weniger als 2,5 mol Methyl-Acrylat pro mol Acrylsäure herstellbar sind und daß sich solche Copolymerisate zur Verarbeitung von Formkörpern eignen. Die gute thermoplastische Verarbeitbarkeit ist vermutlich bedingt durch ein einheitliches Molekulargewicht. Das Molekulargewicht der Polymeren nach der Erfindung liegt vorzugsweise im Bereich von 10.000 bis 100.000, insbesondere 40.000 bis 60.000. Dabei ist ein Verhältnis von MW (Molekulargewicht-Gewichtsmittel) zu MN (Molekulargewicht-Zahlenmittel) von 3 bis 4 und darunter erreichbar und bevorzugt.

Die vorbeschriebenen erfindungsgemäßen Copolymerisate eignen sich als solche zur Herstellung vielerlei Formteile und auch zur Herstellung der vorbeschriebenen Mischung mit Füllstoffen, und können in Form von Pulvern, Granulat, Spritzgußteilen, Preßlingen, Preßformteilen, Blasformteilen, Tiefziehteilen, Gießteilen und, wenn sie weich eingestellt sind, auch in Form von Folien, Platten, Fäden und dergleichen vorliegen. Allgemein eignen sich die hier beschriebenen Copolymerisate zur Herstellung von in wäßrigem Medium bzw. in alkalischem Medium desintegrierbaren bzw. auflösbaren Formkernen. Hierbei kann die Herstellung der Formkerne, wie oben für die Formteile allgemein beschrieben, durch Urformen und/oder Umformen, wie Pressen, Spritzgießen, Kompressionsspritzgießen, Rotationsgießen, Hohlkörperblasen, Tiefziehen und/oder Hohlraumspritzen (Gasinnendruckverfahren) und dergleichen erfolgen. Zur Herstellung von Formkörpern können die Copolymere bzw. ihre Mischungen mit den Füllstoffen noch andere Zusätze enthalten, die bei der Formgebung von thermoplastischen Stoffen üblich sind, wie Stabilisatoren, Gleitmittel, Formtrennmittel und dergleichen.

Weitere Merkmale und Vorteile der Erfindung ergeben sich aus der nachfolgenden Beschreibung von bevorzugten Ausführungsformen der Erfindung in Verbindung mit den Ansprüchen. Hierbei können die einzelnen Merkmale jeweils für sich oder zu mehreren in Kombinationen miteinander bei den einzelnen Ausführungsformen verwirklicht sein.

Bei den nachfolgenden Beispielen wurden die Copolymerisate entsprechend der in den europäischen Offenlegungsschriften 143 894 und 143 935 beschriebenen Verfahrensweise durch Copolymerisation im Extruder hergestellt, wobei das Copolymerisat vorzugsweise ohne Zwischengranulierung aus dem ersten Extruder in Form einer Schmelze direkt in einen zweiten Extruder (Kaskadenschaltung) eingeführt, dort entgast und von Restmonomeren befreit und dann im Anschluß daran im zweiten Extruder gegebenenfalls mit Füllstoffen versetzt und vermischt wurde. Das Entgasen kann auch mindestens teilweise vor der Einleitung in den zweiten Extruder erfolgen. Die erhaltene Polymere bzw. Mischungen wurden strangförmig aus dem zweiten Extruder ausgetragen und granuliert.

### Beispiel 1

Ein Copolymerisat aus 2 mol Methylacrylat pro mol Acrylsäure wurde im zweiten Extruder nach der Entgasung im Gewichtsverhältnis 1:1 mit pulverförmigem, vorher getrocknetem Natriumsulfat vermischt. Es wurde dabei eine gleichförmige milchig trübe Schmelze erhalten, die aus dem zweiten Extruder in Form von Strängen mit einem Durchmesser von ca. 3 mm ausgetragen und in Längeneinheiten von ca. 4 mm abgelängt wurden. Die die Mischung aus Copolymerisat und wasserlöslichem neutralem Füllstoff enthaltenden Granulate ließen sich in Spritzgußmaschinen in üblicher Weise zu Formkörpern verarbeiten. Der als Kern verwendete Formkörper aus Copolymerisat und Natriumsulfat ließ sich nach Erkalten des um ihn herum gespritzten Kunststoffteiles durch eine Öffnung desselben mit Hilfe von heißer Sodalösung innerhalb weniger Minuten herauslösen.

### Beispiel 2

In ähnlicher Weise wie in Beispiel 1 beschrieben, wurden Mischungen aus einem Polymerisat, das jedoch mit einem mol-Verhältnis Methylacrylat zu Acrylsäure von 1:1 hergestellt wurde, und Natriumsulfat bzw. Natriumnitrat mit wechselnden Mengenverhältnissen verwendet. Mit zunehmendem Salzgehalt waren die aus den Mischungen hergestellten Formkörper leichter und schneller löslich in wäßrig-alkalischen Medien. Die Formkörper hatten einen Elastizitätsmodul von 8000 N pro mm² eine Bruchdehnung von weniger als 10 % und eine Temperaturbeständigkeit von 70 °C. Aufgrund ihrer geringen Wärmeleitfähigkeit war es jedoch möglich, sie als Formkerne zu verwenden und dabei mit Kunststoffschmelzen mit höherer Temperatur, beispielsweise 280 °C, zu umspritzen, ohne daß sie ihre Form veränderten.

### Beispiel 3

Es wurde ein Copolymerisat aus 0,75 mol Methylacrylat pro mol Acrylsäure hergestellt wie oben beschrieben. Aus dem Copolymerisat durch thermoplastische Verarbeitung hergestellte Formkörper waren schnell auflösbar. Sie konnten ebenfalls mit Füllstoffen vermischt und verarbeitet werden.

In ähnlicher Weise wurden Mischungen hergestellt, die neben oder anstelle der wasserlöslichen Füllstoffen wasserunlösliche Füllstoffe enthielten.

### Beispiel 4

Es wurde ein Copolymerisat aus 0,5 mol Methylacrylat pro mol Acrylsäure im Extruder hergestellt. In die Copolymerisat-Schmelze wurden im Extruder 25 Gew.-% Talkum eingearbeitet, das als wasserunlöslicher Füllstoff und als Gleitmittel dient. Weitere übliche Additive, wie Antioxydantien und zu sätzliche Gleitmittel, wie Zinkstearat, können in den üblichen Mengen eingearbeitet werden. Die erhaltene Mischung kann direkt weiterverarbeitet, d.h. zu einem Formkörper geformt oder in ein Granulat überführt werden.

Mit Hilfe einer Hohlraumspritzmaschine wurde die erhaltene Mischung zur Herstellung von Hohlräume aufweisenden Formkernen in einer solchen Menge in eine Hohlform gespritzt, daß diese teilweise mit der Schmelze gefüllt war. Durch Einblasen von Stickstoff in die Schmelze wurde diese aufgeblasen und an die Innenwand der Hohlform zur Ausbildung des Hohlformkernes gepreßt und dann gekühlt.

In der Hohlform können bereits Ansätze vorgesehen sein zur Schaffung von Öffnungen im Formkern, die das spätere Eindringen des zur Auflösung dienenden wäßrigen Mediums in den Formkern erleichtern.

Nach Umspritzen des Formkerns mit einem thermoplastischen Kunststoff und Abkühlen des Kunststoffs, wurde der gebildete Verbundkörper aus Kunststoff und Formkern in heißes neutrales Wasser eingebracht und unter Rückfluß erhitzt. Durch Öffnungen im Formkern konnte das Wasser in den Formkern eindringen und diesen von innen her zerstören. Dabei zerfiel der Formkern, wobei nur ein kleiner Teil des Copolymerisats in Lösung ging. Der größte Teil des Copolymerisats fiel zusammen mit dem unlöslichen Füllstoff als Suspension an, die aus dem Kunststoffkörper ausgewaschen wurde.

Beim Abkühlen stieg der Feststoffgehalt der Suspension an. Durch Ansäuern der wäßrigen Suspension mit einer geringen Menge Schwefelsäure trennte sich die Suspension in zwei Phasen auf, nämlich einen Dickschlamm mit ca. 40 bis 45 Gew.-% Feststoffgehalt und eine wäßrige Polymerlösung mit ca. 4 bis 5 Gew.-% Feststoffgehalt, die aufschwimmt. Die wäßrige Polymerlösung wird durch Filtration über einen Filtersack abgetrennt, wonach die im Filtrat enthaltene Schwefelsäure durch Zugabe von Bariumhydroxyd und Umwandlung in unlösliches Bariumsulfat neutralisiert wurde. Das Filtrat kann danach erneut zum "Auflösen" bzw. Desintegrieren von weiteren Formkörpern bzw. Formkernen verwendet werden. Durch Aufkonzentrieren bzw. Arbeiten mit relativ geringen Wassermengen im Verhältnis zum Gewicht des Formkerns kann auch ohne Ansäuren, d.h. völlig frei von Zusätzen an Säuren und Basen, d.h. auch völlig salzfrei gearbeitet werden.

Der das feste Copolymerisat und das Talkum enthaltende Dickschlamm wird danach getrocknet. Die Feststoffanteile fallen in einer Ausbeute von 95 Gew.-% als Pulver an. Das Pulver kann aufgeschmolzen und gegebenenfalls nach Ergänzung von Copolymerisat und/oder Talkum erneut zur Herstellung von Formkernen verwendet werden.

Durch die Wiedereinsetzbarkeit sowohl der Feststoffe als auch der neutralisierten Filtratlösung fallen keine belastenden Abfallstoffe an. Eine Versalzung von Abwässern wird vermieden. Anstelle von Schwefelsäure und Bariumhydroxyd können auch andere Säure-Basenpaare verwendet werden, die unlösliche Salze bilden, zum Beispiel Calciumphosphat. Die unlöslichen Salze sind als Füllstoffe einsetzbar.

Die erfindungsgemäßen Polymere können Wasser aufnehmen. Deshalb empfiehlt sich vor der Verarbeitung eine Vortrocknung bei Temperaturen von 70 bis 100 °C, vorzugsweise 90 bis 95 °C, vorzugsweise im Trockenluftofen oder Vakuumschrank, z.B. auf einen Feuchtigkeitsgehalt kleiner 0,2 %, vorzugsweise kleiner 0,05 %. Es kann aber auch ohne Vortocknen gearbeitet werden.

Um eine Feuchtigkeitsaufnahme bei den Formteilen, insbesondere Fertigkernen, zu vermeiden, kann unmittelbar nach der Herstellung der Kerne und nach Zusammenfügen der Kernhälften eine Lagerung im Trockenraum oder eine Versiegelung der Kerne bevorzugt sein, sofern diese nicht sofort weiterverarbeitet werden.

Kerne, die durch Pressen, Spritzgießen, Kompressionsspritzgießen und Tiefziehen hergestellt wurden, bestehen in der Regel aus zwei Schalen, die vor der Ummantelung miteinander verbunden werden können. Als Fügetechniken eignen sich Kleben und Schweißen.

Als Klebstoffe können verwendet werden: Wasser; ein in Wasser desintegrierter Lösekernpolymer oder ein anderer im Wasser desintegrierbarer oder löslicher Polymer mit und ohne Füller, Verstärkungsstoffen und Additiven, in normaler oder aufkonzentrierter Form; ein organisches Lösungsmittel; ein im organischen Lösungsmittel gelöster Lösekernpolymer oder ein anderer wasserdesintegrierbarer oder wasserlöslicher Polymer, mit oder ohne Füller, Verstärkungsstoffen und Additiven; Dispersion des Lösekernpolymers, oder eines anderen wasserdesintegrierbaren oder wasserlöslichen Polymers.

Als Schweißtechniken können verwendet werden: Ultraschallschweißen, Vibrationsschweißen, Rotationsschweißen, Heißplattenschweißen, elektromagnetisches Schweißen etc.

Die Kernummantelungsmaterialien haben in der Regel eine Verarbeitungstemperatur, die höher ist als die Wärmeformbeständigkeit des Lösekernmaterials.

Um dem Erweichen des Kernes vorzubeugen, kann bei bevorzugten Hohlkernen der Kernhohlraum während des Ummantelns als Kühlkanal verwendet werden.

Als Kühlmedium sind alle Gase oder Flüssigkeiten denkbar, sofern trotz deren Eingriff der Kern während des Ummantelns seine Funktion erfüllt. Da der Lösungsvorgang zeitabhängig ist, kann sogar Wasser als Kühlmedium verwendet werden.

Weiterhin eignen sich als Kühlmedien gekühlte oder verflüssigte Luft oder Stickstoff.

Auch kann der Kern vor dem Ummanteln in einem gekühlten Raum temperiert werden. Hierdurch erhöht sich die Wärmekapazität des Kerns bis zur Temperatur seiner Erweichung. In der Regel kann jedoch auf eine Kühlung verzichtet werden.

Beim Auflösen von Hohlkernen fließt Wasser durch den Kern, wobei die Strömung vorzugsweise turbulent sein soll, damit die abrasiven Kräfte des Wassers (ggf. alkalischen Wassers) ausgenutzt werden kann.

Die bevorzugte Lösung ist das Einbringen von Sonden in den Hohlkern. Diese Sonden haben Löcher, aus denen Wasserstrahlen austreten und auf die Kernoberfläche aufprallen. Die Sonden können axiale und Rotationsbewegungen ausführen, da mit die abrasive Wirkung der unter hohem Druck austretenden Wasserstrahlen auf der ganzen Kerninnenoberfläche wirksam wird.

Die Sonden können aus Metall oder heißwasserbeständigem Kunststoff bestehen. Möglich sind auch begrenzt heißwasserbeständige Kunststoffsonden, die nach ein- oder mehrmaligem Gebrauch ausgewechselt werden können. Die Kunststoffsonden können steif oder flexibel sein, je nach Art des verwendeten Kunststoffs. Steife Sonden können aus mehreren Segmenten bestehen, die mit Gelenken verbunden sind, so daß eine Kernauflösung auch bei rohrkrümmerähnlichen Fertigteilen möglich ist. Flexible Kunststoffsonden benötigen solche Gelenke nicht.

Der Druck des Wassers ist begrenzt durch die Druckfestigkeit der Sonden und des Fertigteils, deshalb muß er, je nach Anwendungsfall, einstellbar sein.

Das abrasive "Auflösen" mit Wasser kann unterstützt werden durch Bürsten, die sich axial bewegen oder rotieren. Ferner kann der abrasive Effekt durch vorzugsweise scharfkantige Partikel, die im wäßrigen Medium suspendiert sind, gefördert werden, so z.B. durch die Füllstoffe selbst.

Die Temperatur des Wassers kann zwischen üblichen Leitungswassertemperaturen und 120 °C, ggf. noch höher liegen. Oberhalb von 95 °C muß dann in druckfesten Autoklaven gearbeitet werden.

Bevorzugte Wassertemperaturen liegen zwischen 40 und 120 °C.

Eine weitere Beschleunigung des Auflöseprozesses kann mit Hilfe der folgenden Zusätze und Methoden erreicht werden:
Es kann in die Polymere ein hydrophiles, druck- und temperaturabhängig arbeitendes Treibmittel eingearbeitet werden, das während der Kernherstellung oder nach dem Ummanteln zur Bildung einer Schaumstruktur aktiviert wird. Die poröse Struktur erhöht die Lösegeschwindigkeit.

Bei Aktivierung während der Kernherstellung, z.B. durch Spritzgießen oder Kompressionsspritzgießen entsteht ein feinporiger, hochverdichteter Schaum, der in seinen mechanischen Eigenschaften nahe denen des nichtgeschäumten Kernes liegt.

Bei Aktivierung, ebenfalls während der Kernherstellung, z.B. durch Gasinnendruckverfahren (Hohlraumspritzgießen), Hohlkörperblasen, Tiefziehen, entsteht außen auf der Ummantelungsseite eine kompakte, stark belastbare Schicht und innen auf der "Löse"-seite eine poröse, schnell lösliche Schicht. Dies kann durch entsprechende zeitliche Drucksteuerung des Gaspolsters beeinflußt werden.

Weiterhin können Metallmehl, Metallpulver, feine Metallkugeln, in denen mit Hilfe eines hochfrequenten elektromagnetischen Wechselfeldes (was normalerweise mit einer Spule erzeugt wird) ein Elektronenstrom induziert wird, der eine Temperaturerhöhung des Lösekerns bewirkt. Da die "Löslichkeit" temperaturabhängig ist, erhöht sich dadurch die Lösegeschwindigkeit. Das Metall selbst wird dabei nicht aufgeschmolzen.

Ein solcher Metallzusatz kann zum Aufheizen von Kernen mit und ohne Treibmittel verwendet werden. Er kann auch eine nachträgliche Aktivierung des Treibmittels bewirken, wobei der Hohlraum des Kernes nicht zugeschäumt werden darf.

Die vorstehenden Varianten sind in Verbindung mit Formkörpern beschrieben, die als Lösungskerne bzw. lösliche Form kerne dienen. Diese Varianten sind aber auch auf andere auflösbare Formkörper anwendbar.

## Patentansprüche

1. Thermoplastisches Copolymerisat aus weniger als 2,5 mol Methyl-Acrylat pro mol Acrylsäure.

2. Copolymerisat nach Anspruch 1 aus 0,2 bis 2 mol, insbesondere 0,4 bis 0,8 mol Methyl-Acrylat pro mol Acrylsäure.

3. Copolymerisat nach Anspruch 1 oder 2 in Form eines Pulvers, Granulats, Spritzgußteils, Preßlings, Preßformteils, einer Folie, ggf. als Mischung mit wasserlöslichen und/oder unlöslichen Füllstoffen.

4. Copolymerisat nach einem der vorhergehenden Ansprüche, dadurch gekennzeichnet, daß der Carboxylgruppengehalt 30 bis 50 %, insbesondere 35 bis 45 % beträgt.

5. Copolymerisat nach einem der vorhergehenden Ansprüche, dadurch gekennzeichnet, daß es in neutralen bis alkalischen wäßrigen Medien, insbesondere neutralen wäßrigen Medien, desintegrierbar, vorzugsweise mindestens teilweise löslich ist.

6. Copolymerisat nach einem der vorhergehenden Ansprüche, dadurch gekennzeichnet, daß es in Form einer thermoplastisch verformbaren Mischung aus 10 bis 90 Gew.-%, insbesondere 40 bis 80 Gew.-% Polymerisat und 90 bis 10 Gew.-%, insbesondere 20 bis 60 Gew.-% mindestens eines Füllstoffes vorliegt.

7. Copolymerisat nach einem der vorhergehenden Ansprüche, dadurch gekennzeichnet, daß es als wasserunlösliche Füllstoffe bzw. Verstärkungsstoffe Kaolin, Glimmer, Glaskugeln, Glas-, Kohle- und/oder andere Fasern, Bariumsulfat, Calciumphosphat und/oder Talkum enthält, wobei Talkum bevorzugt ist.

8. Mischung nach einem der Ansprüche 3 bis 7, dadurch gekennzeichnet, daß sie in Form eines Granulats oder eines Pulvers vorliegt, bei dem vorzugsweise die Polymere und der Füllstoff in den einzelnen Partikeln fest miteinander verbunden sind.

9. Verwendung des Copolymerisats nach einem der vorhergehenden Ansprüche, zur Herstellung von in wäßrigen Medien auflösbaren bzw. desintegrierbaren Formkörpern, insbesondere Formkernen, vorzugsweise durch Urformen und/oder Umformen, wie Pressen, Spritzgießen, Kompressionsspritzgießen, Rotationsgießen, Hohlkörperblasen, Tiefziehen und/oder Hohlraumspritzen.

10. In wäßrigen Medien auflösbarer bzw. desintegrierbarer Formkörper aus einem Copolymerisat bzw. der Mischung nach einem der Ansprüche 1 bis 9, hergestellt vorzugsweise durch Urformen und/oder Umformen, wie Pressen, Spritzgießen, Kompressionsspritzgießen, Rotationsgießen, Hohlkörperblasen, Tiefziehen und/oder Hohlraumspritzen (Gasinnendruckverfahren).

11. Verfahren zum Auflösen bzw. Desintegrieren von Formkörpern nach Anspruch 10, insbesondere zur Wiedergewinnung der darin enthaltenen Copolymerisate und/oder Füllstoffe, dadurch gekennzeichnet, daß die Formkörper mit einem vorzugsweise heißen wäßrigen Medium behandelt werden, wobei mindestens das Copolymerisat des Formkörpers mindestens teilweise aufgelöst wird und der Formkörper dabei zerfällt.

12. Verfahren nach Anspruch 11, dadurch gekennzeichnet, daß zum Entfernen von Formkörpern, insbesondere Formkernen, von angeformten Kunststoffteilen die Formkörper zusammen mit den Kunststoffteilen mit dem wäßrigen Medium behandelt werden und das vom Formkörper befreite Kunststoffteil gewonnen wird.

13. Verfahren nach Anspruch 11 oder 12, dadurch gekennzeichnet, daß das wäßrige Medium im wesentlichen neutral ist, insbesondere bei Copolymerisaten mit höchstens 1 mol Methyl-Acrylat pro mol Acrylsäure.

14. Verfahren nach einem der Ansprüche 11 bis 13, dadurch gekennzeichnet, daß das mit aufgelöstem Copolymerisat angereicherte wäßrige Medium zur Ausfällung von gelöstem Copolymerisat abgekühlt und/oder angesäuert wird.

15. Verfahren nach einem der Ansprüche 11 bis 14, dadurch gekennzeichnet, daß das wäßrige Medium nach Abtrennung von in fester Form vorliegenden Copolymerisaten und/oder Füllstoffen ggf. nach Zugabe von basischen Substanzen zum erneuten Auflösen von Formkörpern wieder verwendet wird.

16. Verfahren nach einem der Ansprüche 11 bis 15, dadurch gekennzeichnet, daß das angefallene Copolymerisat, insbesondere in Form eines Pulvers, getrocknet und ggf. nach Vermischen mit frischem Copolymerisat und/oder Füllstoff erneut zur Herstellung von Formkörpern verwendet wird.

17. Verfahren nach einem der Ansprüche 14 bis 16, dadurch gekennzeichnet, daß zum Ausfällen verwendete Säure durch Zugabe solcher basischen Substanzen neutralisiert wird, die unlösliche Salze bilden, und daß diese Salze vorzugsweise als Füllstoffe verwendet werden.

## Claims

1. Thermoplastic copolymer of less than 2.5 mole of methyl acrylate per mole of acrylic acid.

2. Copolymer according to claim 1, of 0.2 to 2 mole, particularly 0.4 to 0.8 mole of methyl acrylate per mole of acrylic acid.

3. Copolymer according to claim 1 or 2 in the form of a powder, granular material, injection moulding, pressed article, compression moulding, sheet and optionally mixed with water-soluble and/or insoluble fillers.

4. Copolymer according to one of the preceding claims, characterized in that the carboxyl group content is 30 to 50%, particularly 35 to 45%.

5. Copolymer according to one of the preceding claims, characterized in that it is disintegratable in neutral to alkaline aqueous media, particularly neutral, aqueous media and is preferably at least partly soluble.

6. Copolymer according to one of the preceding claims, characterized in that it is in the form of a thermoplastically shapable mixture of 10 to 90% by weight, particularly 40 to 80% by weight polymer and 90 to 10% by weight, particularly 20 to 60% by weight of at least one filler.

7. Copolymer according to one of the preceding claims, characterized in that it contains as water-insoluble fillers or reinforcing agents kaolin, mica, glass balls, glass, carbon and/or other fibres, barium sulphate, calcium phosphate and/or talc, talc being preferred.

8. Mixture according to one of the claims 3 to 7, characterized in that it is in the form of a granular material or a powder, in which preferably the polymers and the filler are firmly interconnected in the individual particles.

9. Use of the copolymer according to one of the preceding claims, for producing moulded articles, particularly mould cores, disintegratable or dissolvable in aqueous media, preferably by processing and/or forming, such as pressing, injection moulding, compression injection moulding, roto-moulding, blow moulding, deep drawing and/or cavity injection.

10. Moulded article disintegratable or dissolvable in aqueous media from a copolymer or the mixture according to one of the claims 1 to 9, produced preferably by processing and/or forming, such as pressing, injection moulding, compression injection moulding, roto-moulding, blow moulding, deep drawing and/or cavity injection (gas internal pressure process).

11. Process for dissolving or disintegrating moulded articles according to claim 10, particularly for the recovery of the copolymers and/or fillers contained therein, characterized in that the moulded articles are treated with a preferably hot aqueous medium, whereby at least the copolymer of the moulded article is at least partly dissolved and the moulded article decomposes.

12. Process according to claim 11, characterized in that for removing moulded articles, particularly mould cores, from shaped plastic parts, the moulded articles are treated together with the plastic parts with aqueous medium and the plastic part freed from the moulded article is recovered.

13. Process according to claims 11 or 12, characterized in that the aqueous medium is substantially neutral, particularly in the case of copolymers with at the most 1 mole of methyl acrylate per mole of acrylic acid.

14. Process according to one of the claims 11 to 13, characterized in that the aqueous medium enriched with the dissolved copolymer is cooled and/or acidified for precipitating dissolved copolymer.

15. Process according to one of the claims 11 to 14, characterized in that the aqueous medium is reused for further dissolving of moulded articles following the separation of the copolymers present in solid form and/or fillers, optionally after the addition of basic substances.

16. Process according to one of the claims 11 to 15, characterized in that the copolymer, particularly in the form of a powder, is dried and reused for producing moulded articles, optionally after mixing with fresh copolymer and/or filler.

17. Process according to one of the claims 14 to 16, characterized in that the acid used for precipitation is neutralized by adding those basic substances which form insoluble salts and that said salts are preferably used as fillers.

## Revendications

1. Copolymère thermoplastique à partir de moins de 2,5 moles de méthylacrylate par mole d'acide acrylique.

2. Copolymère selon la revendication 1 à partir de 0,2 à 2 moles, en particulier 0,4 à 0,8 moles de méthylacrylate par mole d'acide acrylique.

3. Copolymère selon la revendication 1 ou 2 sous la forme d'une poudre, de granulés, d'une pièce moulée par injection, d'une pièce comprimée, d'une pièces moulée par pression, d'une feuille, éventuellement en mélange avec des charges hydrosolubles et/ou insolubles.

4. Copolymère selon une des revendications précédentes caractérisé en ce que la teneur en radicaux carboxyle s'élève à 30 - 50 %, en particulier 35 - 45 %.

5. Copolymère selon une des revendications précédentes, caractérisé en ce qu'il peut être désintégré et est, de préférence, au moins partiellement soluble dans des milieux aqueux neutres à alcalins, en particulier dans des milieux aqueux neutres.

6. Copolymère selon une des revendications précédentes caractérisé en ce qu'il se présente sous la forme d'un mélange déformable thermoplastiquement à partir de 10 à 90 % en poids, en particulier 40 à 80 % en poids de polymère et 90 à 10 % en poids, en particulier 20 à 60 % en poids d'au moins une charge.

7. Copolymère selon une des revendications précédentes, caractérisé en ce qu'il contient comme charges non hydrosolubles ou comme substances de renforcement du kaolin, du mica, des billes de verre, des fibres de verre, de carbone et/ou autres, du sulfate de baryum, du phosphate de calcium et/ou du talc, le talc étant recommandé.

8. Mélange selon une des revendications 3 à 7, caractérisé en ce qu'il se présente sous la forme de granulés ou d'une poudre, les polymères et la charge étant de préférence étroitement liés dans les particules individuelles.

9. Mise en oeuvre du copolymère selon une des revendications précédentes pour la fabrication de corps moulés pouvant être dissous ou désintégrés dans des milieux aqueux, en particulier des noyaux moulés, de préférence par déformation et/ou transformation, comme par pressage, coulage par injection, coulage par injection en compression, coulage par rotation, soufflage de corps creux, emboutissage et/ou coulage en cavité.

10. Corps moulés pouvant être désintégrés ou dissous dans des milieux aqueux à partir d'un copolymère ou du mélange selon l'une des revendications 1 à 9, fabriqués de préférence par déformation et/ou transformation, comme par pressage, coulage par injection, coulage par injection en compression, coulage par rotation, soufflage de corps creux emboutissage et/ou coulage en cavité (procédé sous pression interne de gaz).

11. Procédé de dissolution ou de désintégration de corps moulés selon la revendication 10, en particulier pour la récupération des copolymères et/ou charges qu'ils contiennent, caractérisé en ce que les corps moulés sont traités avec un milieu aqueux de préférence chaud, le copolymère du corps moulé étant au moins partiellement dissous et le corps moulé se décomposant à cette occasion.

12. Procédé selon la revendication 11, caractérisé en ce que, pour l'élimination de corps moulés, en particulier de noyaux moulés ,de pièces en plastique intégrées, les corps moulés contenant les pièces en plastique sont traités avec le milieu aqueux et la pièce en plastique libérée du corps moulé est ainsi récupérée.

13. Procédé selon la revendication 11 ou 12 caractérisé en ce que le milieu aqueux est essentiellement neutre, en particulier dans le cas de copolymères contenant au plus 1 mole de méthylacrylate par mole d'acide acrylique.

14. Procédé selon une des revendications 11 à 13 caractérisé en ce que le milieu aqueux enrichi par le copolymère dissous est refroidi et/ou acidifié en vue de la précipitation du copolymère dissous.

15. Procédé selon une des revendications 11 à 14 caractérisé en ce que le milieu aqueux, après séparation des copolymères et/ou charges présents sous forme solide, est remis en oeuvre, éventuellement après addition de substances basiques, pour une nouvelle dissolution des corps moulés.

16. Procédé selon une des revendications 11 à 15, caractérisé en ce que le copolymère précipité, en particulier sous forme de poudre, est séché et éventuellement remis en oeuvre pour la fabrication de corps moulés après mélange avec des copolymères et/ou charges frais.

17. Procédé selon une des revendications 14 à 16, caractérisé en ce que l'acide mis en oeuvre en vue de la précipitation est neutralisé par addition de substances basiques telles qu'il se forme des sels insolubles et que ces sels sont de préférence mis en oeuvre comme charges.
